# EUROPEAN PATENT SPECIFICATION

(11) **EP 0 424 326 B1**
(45) Date of publication and mention of the grant of the patent: **20.04.1994**
(21) Application number: 90830424.9
(22) Date of filing: 26.09.1990
(51) Int. Cl.: A47J 31/42, A47J 42/50, A47J 42/18

(54) **Single-grinding body grinding device in particular for grinding either one or more coffee blends**
Einstückige Mahlvorrichtung, insbesondere zum Mahlen einer oder mehrerer Kaffeesorten
Dispositif de broyage à corps simple, en particulier pour broyer une ou plusieurs sortes de café

(30) Priority: 26.09.1989 IT 2182489
(43) Date of publication of application: 24.04.1991
(73) Proprietor: CIMBALI S.p.A., I-20082 Binasco (MI) (IT)
(72) Inventor: Locati, Santino, c/o Cimbali S.p.A., I-20082 Binasco, Milano (IT)
(74) Representative: Cicogna, Franco

(56) References cited:
- CH-A- 167 794
- GB-A- 2 120 534
- US-A- 2 827 845
- US-A- 2 868 109
- US-A- 4 062 499

## Description

### BACKGROUND OF THE INVENTION

The present invention relates to a coffee grinding device for coffee making machines of the type using two or more coffee blends.

As is known, for preparing coffee infusions starting from two different coffee blends there are generally used automatic coffee making machines which comprise several coffee grinding devices, each of which is provided and set for grinding a given coffee blend.

Also known is the fact that different coffee blends require a different grinding degree and that a mixture of the coffee blends does not usually result in a satisfactory coffee infusion.

Moreover the coffee, even if it is in grain form, must be properly protected from moist environments.

The document US-A-2 827 845, which represents the most pertinent background art, discloses a restaurant coffee making machine including a simple grinding body coffee grinding device comprising a coffee grinding assembly including a coffee loading hopper adapted to hold a set amount of coffee grains therein.

### SUMMARY OF THE INVENTION

Thus, the main object of the present invention is to overcome the above mentioned drawbacks, by assuring the possibility of using different coffee blends, each of which has the coffee particle size adapted to provide a very good coffee infusion, as well as by preventing ground coffee residues from altering a subsequent coffee dose including a different coffee blend or having a different particle size, and this by the use of a single coffee grinding device.

Another object of the present invention is to provide such a coffee grinding device which is so designed and arranged as to prevent the coffee grains from being heated upon grinding, so as to preserve the main physical and chemical properties of the ground coffee.

Yet another object of the present invention is to provide a coffee grinding device which can be made starting from easily available elements and materials.

According to one aspect of the present invention, the above mentioned objects, as well as yet other objects, which will become more apparent hereinafter, are achieved by a coffee grain grinding device for grinding either one or more coffee blends, defined in the accompanying Claim 1.

### BRIEF DESCRIPTION OF THE DRAWINGS

Further characteristics and advantages of the present invention will become more apparent from the following detailed description of a preferred embodiment thereof, which is illustrated, by way of an indicative but not limitative example, in the following disclosure with reference to the accompanying schematic drawings, where:

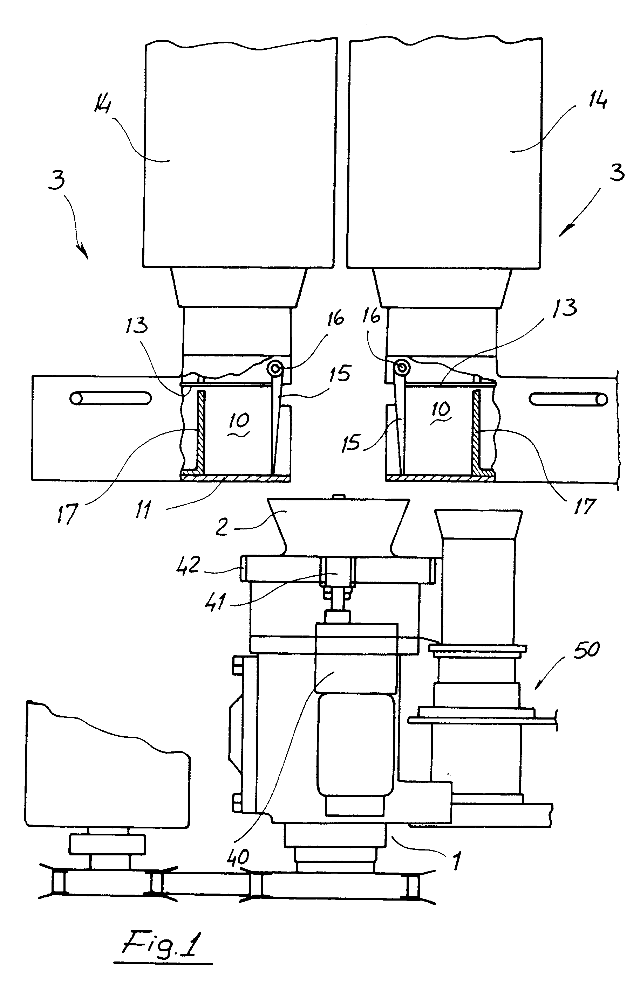

FIGURE 1 is an elevation partially cross-sectioned view of the grinding device according to the present invention,
   and

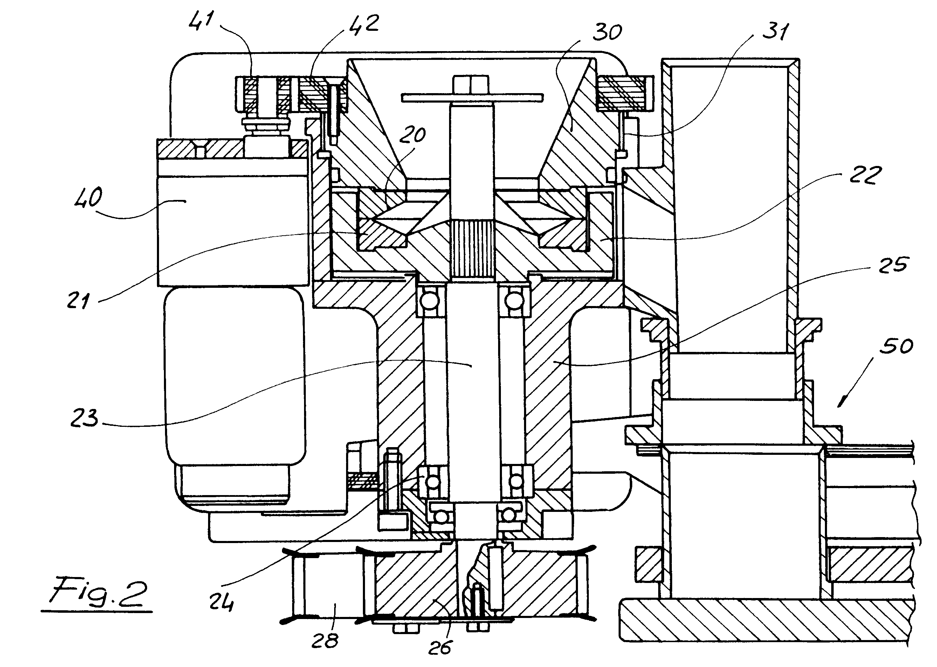

FIGURE 2 is a cross-sectional view of the coffee grinding assembly included in the grinding device according to the invention.

### DESCRIPTION OF THE PREFERRED EMBODIMENT

With reference to the figures of the accompanying drawings,the coffee dose volume adjusting grinding device for coffee making machines according to the present invention comprises a coffee grinding assembly, indicated overally at the reference number 1,which will be disclosed in a more detailed way hereinafter.

The coffee grinding assembly 1 is provided,at the top thereof,with a loading hopper 2 which is arranged under at least two coffee supplying or metering assemblies,each being indicated at 3 .

Each coffee metering assembly 3 comprises a coffee metering chamber 10,defined by a bottom wall 11 which merges with an unloading chute 12,in turn converging onto the loading hopper 2.

The coffee metering chamber 10 is moreover defined by a top movable wall 13,which can be driven with a guillotine like movement,and operating as a separating element for a coffee holder 14,into which a grain coffee blend is introduced.

At the chute side,the metering chamber 10 is delimited by an outlet wall 15,pivoted at 16 at the top end portion thereof,and which can be tilted in order to allow the coffee powder to be ejected toward the loading hopper 2,as it will be disclosed in a more detailed way hereinafter.

The coffee metering chamber 10 is moreover delimited by a metering wall,indicated at the reference number 17,which wall can be differently arranged with respect to the tilting wall 15,so as to adjust the metering volume of the metering chamber 10 and,accordingly,the required coffee dose.

In operation,after having adjusted the metering wall 17 to a set position,the top movable wall 13 is opened so as to allow coffee grains to be introduced into the metering chamber 10.

In this connection it should be apparent that the coffee amount to be introduced into the metering chamber 10 will depend on the volume of said chamber,that is on the position of the wall 17.

After having introduced the coffee grains,the wall 13 is returned to its closing position and the metering wall 17 is driven so as to outward eject the set coffee dose,by causing the wall 15 to be tilted to an open condition to allow the coffee grains to freely fall into the coffee loading hopper 2.

As stated,there are provided at least two coffee metering assemblies,thereby it will be possible to load into the single assemblies respective coffee blends of different characteristics,depending on the coffee infusion to be prepared.

The grinding assembly 1 is provided,under the loading hopper 2,with a fixed grinding member 20,made rigid with said hopper and which overlies a movable coffee grinding member 21,coupled to a plate 22 mounted on a shaft 23 which is coupled, through bearings indicated at 24, by a fixed structure 25.

On the shaft 23 there is also supported a toothed pulley 26 which is driven,through a toothed belt 28,by first turning driving means.

In order to adjust the coffee grinding fineness, the fixed coffee grinding member 20 is coupled to a hopper bearing body 30 which is associated with said fixed structure 25 through a threaded portion 31 allowing the distance of the fixed coffee grinding member from the movable coffee grinding member to be properly adjusted.

In order to perform this spacing adjustment, there are provided second driving means 40 which drive a small pignon 41 meshing with a toothed gear wheel 42, in turn keyed on the hopper bearing body 30.

Thus,by actuating said second driving means 40 the grinding fineness can be adjusted in a very accurate way,in order to provide the proper coffe particle size for each set coffee blend.

To the foregoing it is to be added that,in order to operate with a reduced driving power,the first driving means,provided for turning the movable coffee grinding member,are operated before the introduction of the coffee grains,so as to overcome any starting inertial effects,thereby also reducing possible heating effects on the coffee grains being ground.

Moreover the rotary movement is held for a set period of time from the introduction of the coffee powder,thereby providing a proper cleaning of the active grinding region of the coffee grinding members,so that all of the ground coffee will be ejected to the coffee outlet,where is provided an automatic coffee infusion making assembly,indicated overally at the reference number 50.

Thus,owing to the above disclosed provisions, the grinding device operating power can be held at a very reduced value,while preserving the characteristics of the coffee grains being ground.

From the above disclosure it should be apparent that the invention fully achieves the intended objects.

## Claims

1. A coffee grain grinding device, for grinding either one or more coffee grain blends, comprising a single coffee grain grinding assembly (1) including a coffee grain loading hopper (2) adapted to hold a set amount of coffee grains therein, wherein said device further comprises, above said loading hopper (2), at least two coffee grain supply assemblies (3) provided for holding respectively different types of coffee grains and for supplying said coffee grains in metered amounts into said coffee grain loading hopper (2), each said coffee grain supply assemblies (3) having a coffee grain metering chamber (10) defined by an outlet tilting wall (15), a movable top wall (13) separating a coffee grain holding vessel (14) and a coffee grain metering wall (17) which can be driven, for providing a set grain coffee dose, with respect to said outlet wall (15) so as to eject into said hopper a set grain coffee dose from each said coffee grain supply assemblies (3) to be supplied for grinding to said single coffee grain grinding assembly (1).

2. A grinding device according to Claim 1, wherein said top movable wall (13) is adapted to be driven with a guillotine type of movement to allow said coffee grains to be selectively introduced into said metering chamber (10).

3. A grinding device according to Claim 1, wherein said coffee metering wall (17) can be driven toward said tilting wall (15) so as to tilt said tilting wall to an opening position thereof as said coffee grains are loaded into said hopper (2).

4. A grinding device according to Claim 1, wherein said coffee grinding assembly (1) comprises a coffee grinding fixed member (20) rigid with said hopper (2) and facing a coffee grinding movable member (21) coupled to a plate (22) keyed on a shaft (23), said shaft being driven by first driving means.

5. A grinding device according to Claim 4, wherein said fixed grinding member (20) is coupled to spacing adjusting means (31) adapted to adjust a spacing of said fixed and movable grinding members, (20, 21) said spacing adjusting means comprising a coupling threaded portion (31) coupling a hopper bearing body (30) and a fixed structure (25), said hopper bearing body (30) being provided with a gear wheel (42) meshing with a pinion (41) driven by second driving means (40).

6. A grinding device according to Claim 1, wherein said grinding device further comprises means for turning said movable grinding member (20) before the introduction of said coffee grains in order to reduce inertia effects of said movable grinding member (20).

## Patentansprüche

1. Eine Kaffeebohnenmahlvorrichtung, um entweder eine oder mehrere Kaffeebohnensorten zu mahlen, umfassend eine einzelne Kaffeebohnenmahlmontage (1), einschließend einen Kaffeebohneneinfülltrichter (2), der angepaßt ist, eine vorgegebene Menge Kaffeebohnen darin zu enthalten, wobei diese Vorrichtung weiterhin, oberhalb dieses Kaffee-Einfülltrichters (2), mindestens zwei Kaffeebohnenspendemontagen (3) umfaßt, die bereitgestellt sind, jeweils verschiedenartige Kaffeebohnen zu enthalten und zum Spenden dieser Kaffeebohnen in dosierten Mengen in diesen Kaffeebohneneinfülltrichter (2); jede dieser Kaffeebohnenspendemontagen (3) besitzt eine Kaffeebohnendosierkammer (10), begrenzt durch eine schwenkbare Austrittswand (15), eine bewegliche Oberwand (1 3) zur Trennung von einem Kaffeebohnenvorratsbehälter (14) und eine Kaffeebohnendosierwand (17), die, um eine vorgegebene Kaffeebohnenmenge bereitzustellen, bezüglich dieser Austrittswand (15) verschoben werden kann, um so in diesen Einfülltrichter eine vorgegebene Kaffeebohnenmenge aus jeder dieser Kaffeebohnenspendemontagen (3) zu stoßen, die zum Mahlen zu dieser einzelnen Kaffeebohnenmahlmontage (1) befördert werden müssen.

2. Eine Mahlvorrichtung gemäß Anspruch 1, wobei diese bewegliche Oberwand (13) angepaßt ist, mit einer fallbeilartigen Bewegung betätigt zu werden, um zu ermöglichen, daß diese Kaffeebohnen selektiv in diese Dosierkammer (10) eingefüllt werden.

3. Eine Mahlvorrichtung gemäß Anspruch 1, wobei diese Kaffeedosierwand (17) gegen diese schwenkbare Wand (15) verschoben werden kann, um so diese schwenkbare Wand in ihre geöffnete Stellung zu schwenken, wenn diese Kaffeebohnen in diesen Einfülltrichter (2) gefüllt werden.

4. Eine Mahlvorrichtung gemäß Anspruch 1, wobei diese Kaffeemahlmontage (1) ein festes Kaffeemahlteil (20) umfaßt, starr mit diesem Einfülltrichter (2) verbunden und einem beweglichen Kaffeemahlteil (21) gegenüberliegend, das mit einer Platte (22) verbunden ist, die auf einem Schaft (23) verkeilt ist, dieser Schaft wird durch eine erste Antriebsvorrichtung angetrieben.

5. Eine Mahlvorrichtung gemäß Anspruch 4, wobei dieses feststehende Mahlteil (20) mit einer einstellbaren Abstandsvorrichtung (31) verbunden ist, die angepaßt ist, den Abstand von diesen feststehenden und beweglichen Mahlteilen (20, 21) einzustellen, diese einstellbare Abstandsvorrichtung umfassend einen gewindeten Kupplungsteil (31), der einen den Einfülltrichter tragenden Körper (30) und eine fixierte Struktur (25) verbindet, dieser den Einfülltrichter tragende Körper (30) ist mit einem Zahnrad (42) bereitgestellt, das in ein Ritzel (41) eingreift, das durch eine zweite Antriebsvorrichtung (40) angetrieben wird.

6. Eine Mahlvorrichtung gemäß Anspruch 1, wobei diese Mahlvorrichtung weiterhin eine Vorrichtung zum Drehen dieses beweglichen Mahlteils (20) vor dem Einfüllen dieser Kaffeebohnen umfaßt, um Trägheitseffekte dieses beweglichen Mahlteils (20) zu verringern.

## Revendications

1. Appareil de broyage pour grains de café pour moudre ou bien une ou bien plusieures qualités de grains de café, comprenant un seul assemblage de broyage (1) de grains de café avec une trémie (2) de chargement en grains de café adaptée à contenir une déterminée quantité de grains de café, où ledit appareil en plus comprend, au-dessus de ladite trémie (2), au moins deux assemblages (3) d'alimentation en grains de café prévus pour contenir respectivement de différentes types de grains de café et pour alimenter lesdits grains de café en quantités dosées dans ladite trémie (2) d'alimentation en grains de café, chacun dedits assemblages (3) d'alimentation en grains de café ayant une chambre (10) de dosage des grains de café définie par une paroi renversable de déchargement (15), une paroi supérieure mobile (13) séparant un récipient (14) contenant les grains de café et une paroi (17) de dosage des grains de café qui peut être déplacée par rapport à ladite paroi de déchargement (15), afin de pourvoir une déterminée dose de café, en éjectant dans ladite trémie une dose de grains de café déterminée de chacun desdits assemblages (3) d'alimentation en grains de café, délivrés pour la mouture dans ledit unique assemblage de broyage (1) de grains de café.

2. Appareil de broyage selon la Revendication 1, où ladite paroi mobile supérieure (13) est adaptée à être commandée avec un mouvement à guillotine afin de permettre que lesdits grains de café soient introduits sélectivement dans ladite chambre de dosage (10).

3. Appareil de broyage selon la Revendication 1, où ladite paroi (17) de dosage de café peut être déplacée vers ladite paroi renversable (15), en renversant ladite paroi renversable dans sa position ouverte lorsque les grains de café sont alimentés dans ladite trémie (2).

4. Appareil de broyage selon la Revendication 1, où ledit assemblage (1) de broyage à café comprend un élément fixe (20) de broyage à café faisant corps avec ladite trémie (2) et faisant face à un élément mobile (21) de broyage à café accouplé à une tôle (22) clavetée sur un arbre (23), ledit arbre étant commandé par un premier dispositif de commande.

5. Appareil de broyage selon la Revendication 4, où ledit élément fixe (20) de broyage est accouplé à un dispositif d'ajustement écartant (31) adapté à l'ajustement de l'écartement entre lesdits éléments de broyage fixe et mobile (20, 21), ledit dispositif d'ajustement écartant comprenant une partie d'accouplement filetée (31) accouplant un corps (30) supportant la trémie et une structure fixe (25), ledit corps (30) supportant la trémie étant pourvu d'une roue d'engrenage (42) mordant un pignon (41 ) actionné par un second dispositif de commande (40).

6. Appareil de broyage selon la Revendication 1, où ledit appareil de broyage comprend ultérieurement un dispositif pour mettre en rotation ledit élément mobile (20) de broyage, avant de l'introduction desdits grains de café afin de réduire les effets inertiels sur ledit élément mobile (20) de broyage.
